# EUROPEAN PATENT APPLICATION

(11) **EP 4 831 967 A1**
(43) Date of publication of application: **28.10.2026**
(21) Application number: 26166526.9
(22) Date of filing: 20.03.2026
(51) Int. Cl.: G09B 19/00, G09B 9/00, G09B 19/24

(54) **IDENTIFYING OBJECT-SPECIFIC WELDING CHARACTERISTICS FOR AUGMENTED REALITY WELDING SYSTEMS**

(30) Priority: 22.04.2025 US 202563792686 P; 25.02.2026 US 202619549641
(71) Applicant: Illinois Tool Works Inc., Glenview IL 60025 (US)
(72) Inventor: GUSE, Matthew, Glenview, 60025 (US); BRUESEWITZ, Jeremy, Glenview, 60025 (US); KOPAC III, Jordan, Glenview, 60025 (US)
(74) Representative: HGF

(57) **Abstract**

Various implementations disclosed herein include devices, systems, and methods for identifying object-specific welding characteristics in augmented reality welding systems. For example, a process may include obtaining three-dimensional (3D) data associated with at least a portion of an object in a physical environment. The process may further include determining a 3D model of the object based on the 3D data. The process may further include determining welding characteristics associated with the object based on the 3D model. The process may further include identifying virtual training elements associated with a welding training user interface based on the 3D model and the welding characteristics. The process may further include providing a view of an augmented reality (AR) environment on the display that includes at least a portion of the object and the one or more virtual elements associated with the welding training user interface.

## Description

### TECHNICAL FIELD

The present disclosure generally relates to augmented reality welding systems and, more particularly, to identifying object-specific welding characteristics in augmented reality welding systems.

### BACKGROUND

Some augmented reality welding systems present welding simulations (e.g., for training) via a display screen using coupons. The welding simulations are designed for standard coupons for practicing on standard weld types. However, some entities have very unique coupons with a desire to virtually train users on these specifically shaped objects in order to prevent waste, e.g., virtually welding on uniquely shaped objects that are not standard coupons.

Limitations and disadvantages of conventional and traditional approaches will become apparent to one of skill in the art, through comparison of such systems with the present disclosure as set forth in the remainder of the present application with reference to the drawings.

### SUMMARY

Various implementations disclosed herein include devices, systems, and methods that provide a training tool for a welder in augmented reality (AR) space using three-dimensional (3D) scans of a client-specific coupon/object. An AR welding system provides standard size coupons for practicing on standard weld types (e.g., butt, tee, corner, lap, edge, etc.). However, some clients have very specific shaped coupons that they want to virtually train their employees on in order to prevent waste, e.g., virtually welding on real and unique client-specific objects (also referred to herein as a "distinctively shaped object").

In an exemplary process, the AR welding system described herein may first obtain 3D scan data of an object, such as, *inter alia,* a unique coupon. For example, the AR welding system may obtain depth data from a previous scan or from a live scan using a sensor on the AR welding system or from another camera/device. The process may then identify object-specific welding characteristics for the distinctively shaped object. For example, identifying the object-specific welding characteristics may be automatically performed by the AR welding system, or setup by a user (trainer that identifies the shape, type, and/or location of one or more weld joint(s). Finally, the process may provide a view of the object (unique coupon) and a welding training user interface in an AR environment. These AR coupons may be stored in a database (and/or identified by a QR code) and reused at a subsequent time for training.

In general, one innovative aspect of the subject matter described in this specification can be embodied in methods for a welding training system that include the actions of, at a device having a processor and a display, obtaining three-dimensional (3D) data associated with at least a portion of an object in a physical environment. The actions may further include determining a 3D model of at least the portion of the object based on the 3D data. The actions may further include determining one or more welding characteristics associated with at least one surface of the object based on the 3D model. The actions may further include identifying one or more virtual training elements associated with a welding training user interface based on the 3D model and the one or more welding characteristics. The actions may further include providing a view of an augmented reality (AR) environment on the display, the view including at least the portion of the object in the physical environment and the one or more virtual elements associated with the welding training user interface.

These and other embodiments may each optionally include one or more of the following features.

In some aspects, the 3D data includes Time-of-Flight (ToF) data, Light Detection and Ranging (LIDAR) data, structured light data, stereo vision data, pulse-based data, phase-shift-based data, or a combination thereof. In some aspects, obtaining the 3D data includes a live scanning of the object in the physical environment using a sensor. In some aspects, the sensor includes a Time-of-Flight (ToF) sensor, a Light Detection and Ranging (LIDAR) sensor, a structured light sensor, a stereo vision sensor, a pulse-based sensor, a phase-shift-based sensor, or a combination thereof.

In some aspects, the device includes the sensor. In some aspects, the device is a first device, a second device includes the sensor, and the second device is not associated with the welding training system.

In some aspects, the 3D model of at least the portion of the object is generated by the device of the welding training system. In some aspects, the 3D model of at least the portion of the object is generated by and obtained from a different device.

In some aspects, determining the one or more welding characteristics associated with at least one surface of the object is based on a weld identification protocol that identifies at least one of a shape, a type, and a location of at least one weld joint associated with the at least one surface of the object. In some aspects, the identified shape, type, and location of the at least one weld joint associated with the at least one surface of the object is presented in a view of the welding training user interface.

In some aspects, determining the one or more welding characteristics associated with at least one surface of the object is based on user input via the welding training user interface that identifies at least one of a shape, a type, and a location of at least one weld joint associated with the at least one surface of the object.

In some aspects, the determined one or more welding characteristics associated with at least one surface of the object are stored in a coupon database. In some aspects, each determined one or more welding characteristics associated with at least one surface of the object are stored in the coupon database are identified based on a unique identification code.

In some aspects, the method further includes the actions of updating the view of the 3D model based on an object recognition protocol that identifies that the object has been moved or a different object is positioned within the view of an extended reality (XR) environment.

In accordance with some implementations, a device includes a display, one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a welding training system includes a display screen configured to display a simulated rendering, and control circuitry configured to perform or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary device for an augmented reality welding system in a physical environment in accordance with some implementations.
Figure 2A illustrates the exemplary device for an augmented reality welding system of Figure 1 during a welding training session with a user wearing a simulated welding helmet, in accordance with some implementations.
Figures 2B and 2C illustrate views of a welding training user interface for the augmented reality welding system of Figure 2A, in accordance with some implementations.
Figure 3 is a block diagram illustrating components of the example augmented reality welding system of Figure 1, in accordance with some implementations.
Figures 4A-4C illustrate different perspective views of a distinctively shaped object, in accordance with some implementations.
Figure 5 illustrates three-dimensional (3D) scanning of the distinctively shaped object of Figures 4A-4C using the example augmented reality welding system of Figure 1, in accordance with some implementations.
Figures 6A-6D illustrate views of virtual content associated with an object scanning application for a welding training user interface, in accordance with some implementations.
Figure 7 illustrates operating the exemplary device for an augmented reality welding system of Figure 1 during a welding training session for a trainee for application with the distinctively shaped object of Figures 4A-4C, in accordance with some implementations.
Figure 8 is a flowchart illustrating a method for implementing a welding training process for an object, in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

As used herein, the terms "about" and/or "approximately," when used to modify or describe a value (or range of values), position, orientation, and/or action, mean reasonably close to that value, range of values, position, orientation, and/or action. Thus, the examples described herein are not limited to only the recited values, ranges of values, positions, orientations, and/or actions but rather should include reasonably workable deviations.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may include a first "circuit" when executing a first one or more lines of code and may include a second "circuit" when executing a second one or more lines of code. As utilized herein, circuitry is "operable" and/or "configured" to perform a function whenever the circuitry includes the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems including discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC). The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type power refers to power suitable for welding, cladding, brazing, plasma cutting, induction heating, carbon arc cutting, and/or hot wire welding/preheating (including laser welding and laser cladding), carbon arc cutting or gouging, and/or resistive preheating.

As used herein, a welding-type power supply and/or power source refers to any device capable of, when power is applied thereto, supplying welding, cladding, brazing, plasma cutting, induction heating, laser (including laser welding, laser hybrid, and laser cladding), carbon arc cutting or gouging, and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

Some examples of the present disclosure relate to a welding training system, including a display screen configured to display a simulated rendering and control circuitry configured to determine a visual effect based on one or more settings and a simulated arc state, and apply the visual effect to at least a portion of the simulated rendering. In some examples, the visual effect includes a filter. In some examples, the filter reduces a brightness of at least a portion of the simulated rendering. In some examples, the filter is uniform or based on a spectral transmissivity curve. In some examples, the portion includes at least one of a background, a foreground, an entirety, a weld area, a welding arc, or a weld pool of the simulated rendering. In some examples, the simulated arc state includes a visible simulated arc or an absent simulated arc. In some examples, the one or more settings simulate settings of an auto-darkening welding helmet. In some examples, the one or more settings include one or more of a shade setting, a sensitivity setting, a helmet model setting, or a delay setting.

In some examples, the sensitivity setting sets an arc brightness threshold above which the visual effect applies a filter to the portion of the simulated rendering. In some examples, wherein the shade setting sets a filter level of the visual effect after an arc brightness threshold is reached. In some examples, the delay setting includes a time delay between a change of the simulated arc state and a change of the visual effect. In some examples, the helmet model setting includes a type of welding helmet, wherein the visual effect includes a filter, and wherein the filter is based on a spectral transmissivity curve of the type of welding helmet. In some examples, the control circuitry is further configured to determine the visual effect based on one or more weld settings. In some examples, the one or more weld settings include one or more of a voltage, a current, a gas type, a wire feed speed, a workpiece material type, or a filler type. In some examples, the control circuitry is further configured to determine the visual effect based on a simulation difficulty setting.

In some examples, the system further includes a simulated welding helmet having the display screen, wherein the simulated welding helmet includes a sensor, such as a camera, configured to capture images of a surrounding environment. In some examples, the control circuitry is further configured to receive the images from the camera, detect one or more weld settings of the welding training system, and generate the simulated rendering based on the images and the one or more weld settings.

Some examples of the present disclosure relate to a method, including determining, via control circuitry, a visual effect based on one or more settings and a simulated arc state, applying, via the control circuitry, the visual effect to a simulated rendering, and displaying the simulated rendering on a display screen. In some examples, applying the visual effect includes filtering a brightness of at least a portion of the simulated rendering, wherein the portion includes a background, a foreground, an entirety, a weld area, a welding arc, or a weld pool of the simulated rendering. In some examples, the one or more settings include one or more of a shade setting, a sensitivity setting, a helmet model setting, or a delay setting.

Some examples of the present disclosure relate to augmented reality welding systems. In some examples, an augmented reality welding system has a display screen configured to display a simulated rendering, such as display screen of a welding helmet worn by the user. The simulated rendering may be based on recorded images of a surrounding environment, such as recorded by one or more cameras configured to record images. In some examples, the recorded images are processed and/or augmented by an augmented reality computing system to create the simulated rendering. In some examples, the simulated rendering includes more or fewer images and/or details (e.g., relating to an arc, a workpiece, a welding torch, etc.) than the images recorded by the cameras. In some examples, the simulated rendering is presented to a user via the display screen.

In some examples, the computing system is further configured to add a visual effect to the simulated rendering when the simulated rendering includes images related to an augmented and/or simulated arc. In some examples, the visual effect is a filtering effect that simulates the effect of a light filter associated the augmented and/or simulated arc. In some examples, the visual effect is designed to enhance the reality of the augmented reality welding system by emulating a filtering, shading, tinting, and/or darkening effect of actual welding helmets when an actual arc is present.

In some examples, the augmented reality system further includes one or more settings that impact the visual effect. Some of the settings may be similar to settings that sometimes appear on actual welding helmets, such as, for example, a shade setting, a sensitivity setting, and/or a delay setting. In some examples, additional settings specific to the augmented reality welding system are provided, such as, for example, a welding helmet model setting and/or a difficulty or realism setting. These settings may allow a user to adjust and/or customize the augmented reality welding experience. In some examples, the computing system may apply the visual effect to the simulated rendering based on the one or more settings.

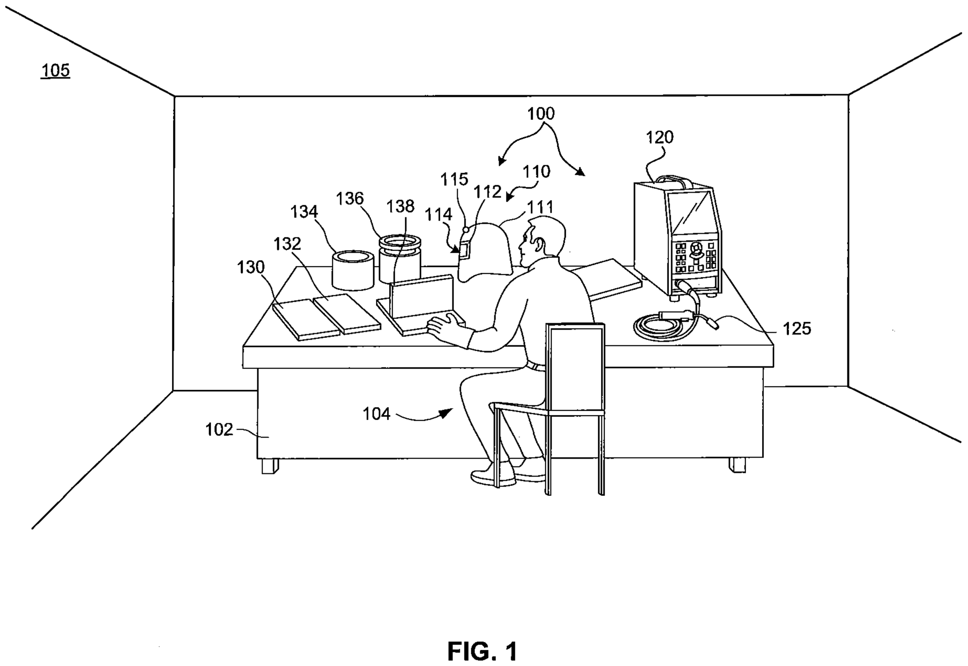

**Figure 1** illustrates an example of an augmented reality welding system 100 for welding operable to render 3D holographic images before, during, and after welding operations in an augmented reality (AR) environment. While the present disclosure sometimes refers to just augmented reality for simplicity, it should be understood that features of the augmented reality welding system 100 may also be implemented in a mixed reality (MR) welding system, a virtual reality (VR) welding system, or an extended reality (XR) system. In some examples, the augmented reality welding system 100 may be used for welding training.

In the example of Figure 1, the example augmented reality welding system 100 is operating in a physical environment 105. The physical environment 105 is a room that includes a user 104, a desk 102, and welding training objects 130, 132, 134, 136, and 138 (also referred to herein as coupons). The user 104 (e.g., a trainee training on the augmented reality welding system 100) is sitting at the desk 102 about to engage with welding training with the augmented reality welding system 100.

In the example of Figure 1, the augmented reality welding system 100 includes a simulated welding helmet 110, a computing system 120, an optical head mounted display (OHMD) 114 in communication with the computing system 120, and a user interface 206 (not shown in Figure 1) in communication with the computing system 120. The simulated welding helmet 110 may include a single integrated unit with protective shell 111 and the OHMD 114. In another example implementation, the OHMD 114 may be used in conjunction with and/or integrated into a welding helmet having a shell 111 and auto-darkening lens 112 and a separate OHMD 114 which may mount to the shell 111 and over (or under) the lens 112. In various example implementations, the simulated welding helmet 110 may include any combination of one or more of a helmet, a mask, goggles, glasses, a hard hat with eye protection, a helmet attachment, a mask attachment, a goggle attachment, and/or the like.

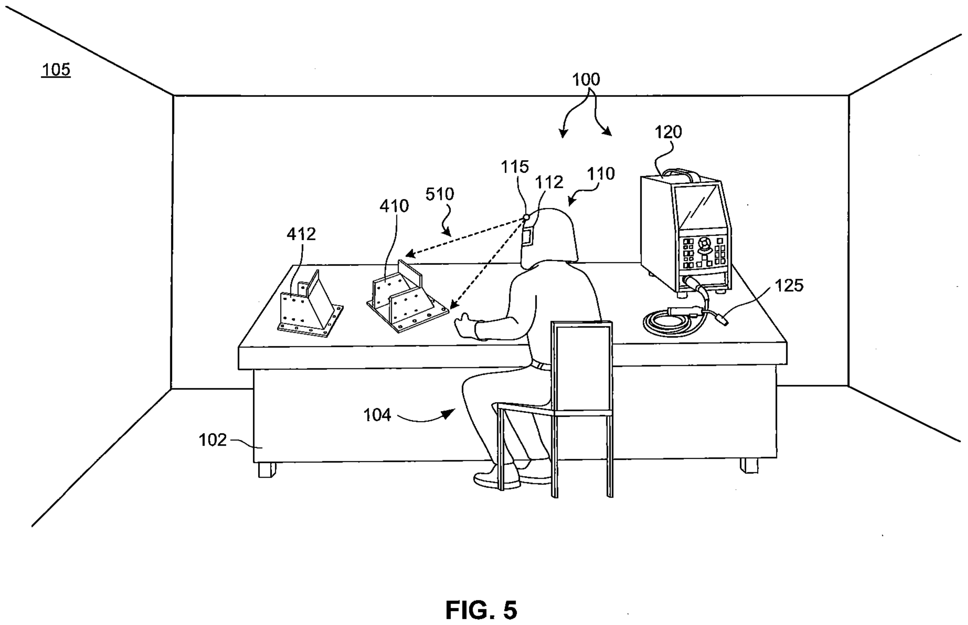

In the example of Figure 1, the simulated welding helmet 110 further includes one or more sensors 115 affixed to the outer shell 108. In some examples, the sensors 115 may be digital video cameras. As shown, there is one sensor 115 affixed to the outer shell 111, however, any number of sensors 115 may be fixed to the simulated welding helmet 110, or may be separate sensors and/or cameras for capturing image data and/or depth data of the physical environment (e.g., object scanning). For example, the one or more sensors 115 may include one or more RGB cameras (e.g., with a complimentary metal-oxide-semiconductor (CMOS) image sensor or a charge-coupled device (CCD) image sensor), monochrome cameras, IR cameras, depth cameras (e.g., time-of-flight sensor, passive or active stereo sensors such as a structured light depth camera, and the like), event-based cameras, and/or the like. In some embodiments, multiple sensors 115 may be arranged in a triangle configuration so as to increase the accuracy of depth and/or three-dimensional (3D) spatial calculations, such as by the computing system 120, for example. In some examples, there may be less or more sensors 115. In some examples, only one sensor 115 may be needed to facilitate depth and/or spatial calculations (e.g., by moving the object around for a complete object scan). During a scan (e.g., see Figure 5), the sensor 115 is directed forward, in the same direction a user wearing the simulated welding helmet 110 would be looking. In some examples, the sensors 115 may be movably mounted, and/or have movable lenses configured to redirect a focus (and/or adjust certain attributes) of the sensors 115, in response to one or more command signals (e.g., received from computing system 120 and/or sensor controller(s) 215). In some examples, the sensors 115 may be otherwise positioned on the simulated welding helmet 110 and/or disconnected from the simulated welding helmet 110 entirely.

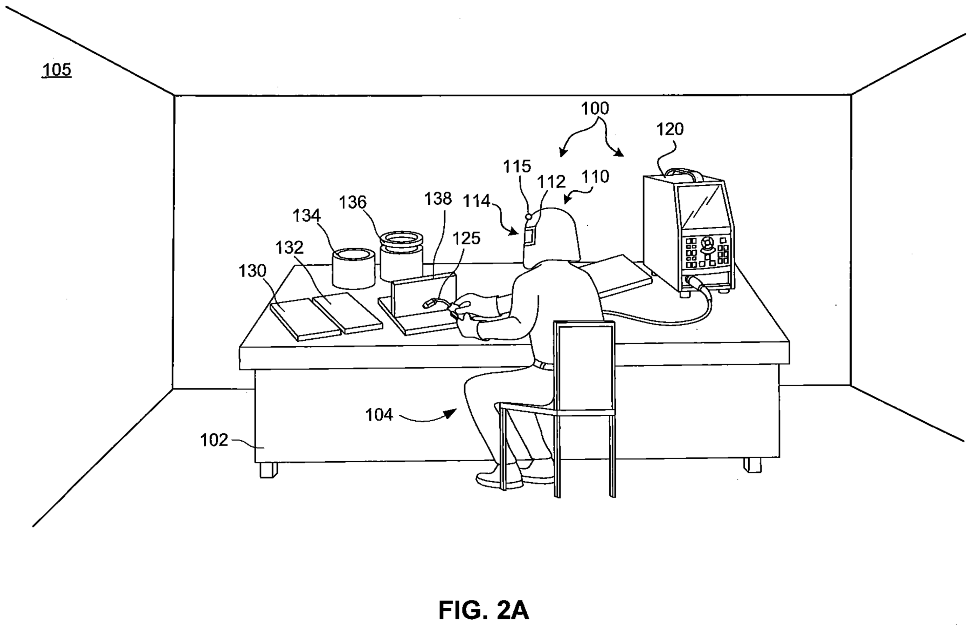

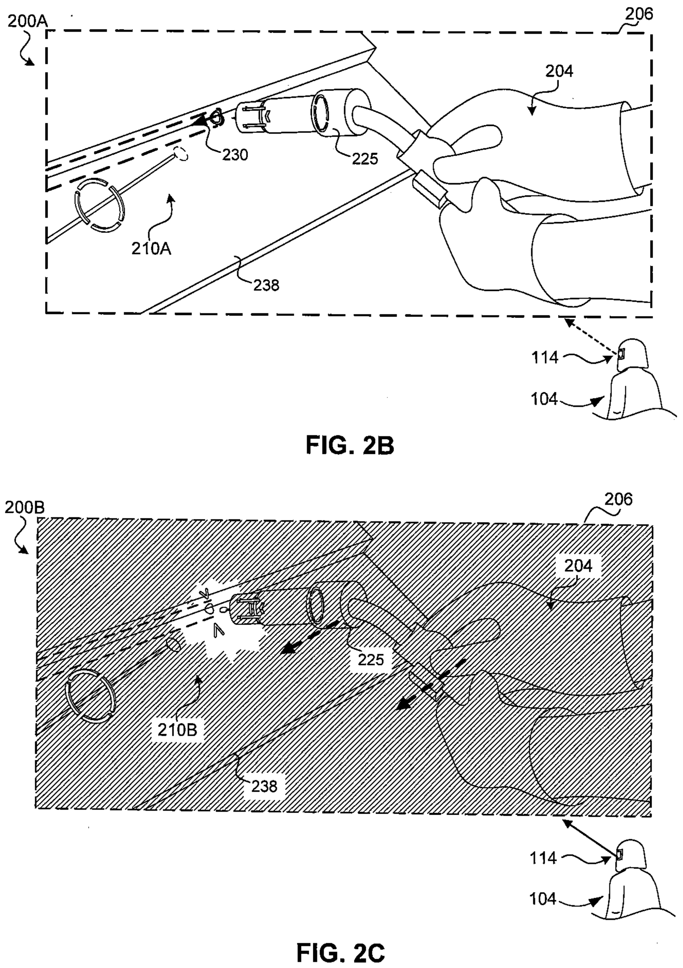

**Figure 2A** illustrates a user 104 using the augmented reality welding system 100 of Figure 1 (e.g., wearing a simulated welding helmet 110) while the user 104 interacts with a welding training object 138 (e.g., practices an AR welding technique on a coupon). **Figure 2B** and **Figure 2C** illustrate example views of the user interface 206 of the augmented reality welding system 100 via the OHMD 114.

Figure 2A illustrates the exemplary device for an augmented reality welding system of Figure 1 during a welding training session with a user 104 wearing a simulated welding helmet 110, in accordance with some implementations. Figure 2B and Figure 2C illustrate views 200A, 200B, respectively, of a welding training user interface 206 for the augmented reality welding system of Figure 2A, in accordance with some implementations. In particular, Figure 2B illustrates a view 200A before the user 104 is about to practice a welding technique, which includes virtual training elements at area 210A. Figure 2B illustrates a view 200B while the user 104 is practicing the welding technique, which includes virtual training elements at area 210B to assist the user 104 as he or she moves the welding torch 125 (e.g., as illustrated by the representation 204 of the user's 104 hands and the representation 225 of the torch 125). In some implementations, the views 200A and 200B provide passthrough video of the physical elements of the environment (e.g., viewing a video feed of the physical environment). Additionally, or alternatively, in some implementations, the views 200A and 200B provide virtual representations of the physical elements of the environment (e.g., viewing a virtual representation of the physical environment).

The scenario shown in Figure 2A may be, for example, prior to the user 104 using torch 125 to weld a testing workpiece (e.g., training object 138, also known as a coupon). In this scenario, the simulated welding helmet 110 (e.g., via the OHMD 114) may, for example, present an instructional/training holographic image or video of the virtual torch 225 welding the representation 238 of the training object 138 in the manner in which the welding equipment operator is to weld the training object 138. The image or video may be based, for example, on computer-aided design (CAD) models for the training object 138, the finished weld on the workpiece (not shown), welding work instructions for the training object 138, and/or other data about the testing workpiece retrieved from local and/or remote (e.g., on a networked server, in a cloud data center, etc.) storage. For example, as illustrated in view 200A, the holographic image or video may show the virtual torch 225 passing the workpiece in the direction indicated by arrow 230, and having appropriate parameters (e.g., travel angle, work angle, travel speed, contact-tip-to-work distance, and/or aim or wire placement) at various points along the seam as it makes the pass as illustrated in area 210A. In this pre-weld instructional scenario, the virtual objects (e.g., representation 238 of the training object 138) may, for example, provide additional information about the weld to be performed. For example, virtual objects or virtual elements on a user interface may provide text instructions describing the actions being performed by the virtual torch 225 (e.g., a representation of torch 125) and/or providing advice, warnings, clamp engagement, pre-heat, surface cleaning and tack weld reminders, notes previously taken by a welding equipment operator working on a similar workpiece, etc. As another example the virtual objects (e.g., representation 238 of the training object 138) may include actual photographs of previous welds performed on similar workpieces. The virtual objects may provide controls that the user 104 can virtually interact with to control what s/he sees. For example, the objects may be fast forward, rewind, pause, play, etc. controls that the user 104 can virtually interact with (through gesture recognition, wearable user interface, voice recognition, physical controls, and/or the like) to control the playback of the virtual welding operation. The virtual objects may, for example, provide graphical representations (e.g., charts, meters, etc.) of welding parameters (such as torch angles, speed, aim, etc.) and/or welding equipment settings (e.g., voltage, amperage, wire speed) of the virtual torch as it performs the virtual weld.

As another example, the scenario shown in Figure 2A may be after the training object 138 has been welded in the training scenario. In this scenario, the simulated welding helmet 110 may present a recording of the welding operation performed on the training object 138. This enables the user 104 (who may be the welding equipment operator who performed the training weld or an instructor, inspector, or the like) to review the weld operation to, for example, inspect for possible quality issues. The virtual objects may, for example, provide additional information about the weld that was performed. For example, the user interface 206 may provide text describing aspects of the weld that were done properly and those that were not. As another example the user interface 206 may include actual photographs of the completed weld (e.g., with the arc and/or other obstructions removed so the user 104 can clearly see, for example, what was happening in the weld puddle during the weld). The user interface 206 may provide controls that the user 104 can virtually interact with to control what he or she sees. For example, the controls may include fast forward, rewind, pause, play, etc. controls that the user 104 can virtually interact with (through gesture recognition, voice recognition, wearable user interface, physical controls, and/or the like) to control the playback of the recorded welding operation. The virtual objects may, for example, provide graphical representations (e.g., charts, meters, etc.) of welding parameters (such as torch angles, speed, aim, etc.) and/or welding equipment settings (e.g., voltage, amperage, wire speed) that are time synchronized to the playback of the recording. In this manner, the user 104 could, for example, virtually touch a portion of the completed weld bead to cause the video to seek to the point of the recording at which the touched portion of the weld bead was laid down and cause the virtual objects to display the equipment settings, torch parameters, etc. that were present at the time the touched portion of the weld bead was laid down. Alternatively, the virtual object could be a 3D virtual torch in the proper orientation relative to the training object 138 (e.g. work angle and travel angle) and position to achieve the desired results, that is different than the recorded torch movement. Both desired and actual virtual torches can be animated together in the playback on the real seam to contrast the difference or gap for improvement.

In another example scenario, the virtual torch 225 may be rendered and presented to the wearer during welding of the training object 138. For example, the representation 225 of the torch 125, also referred to as a "virtual torch 225", may provide a guide for welding parameters such as torch angles, speed, aim, etc. during the welding operation such that the goal is for the user 104 to keep the real torch 125 aligned in three dimensions with the virtual torch 225 as the weld progresses (e.g., as illustrated by area 210A and 210B). As another example the user interface 206 may present real-time visual feedback such as actual torch angles, torch speed, contact tip to work distance, welding equipment settings, etc. during a welding operation. As discussed below, the OHMD 114 on the simulated welding helmet 110 may provide an outline or wire-frame model of the important objects superimposed on the real objects such that the user 104 can simultaneously see both the arc/puddle and points of the training object 138 at a distance from the arc which would normally be too dark through the auto-darkening lens when the arc is present, or physically obstructed due to the viewing angle.

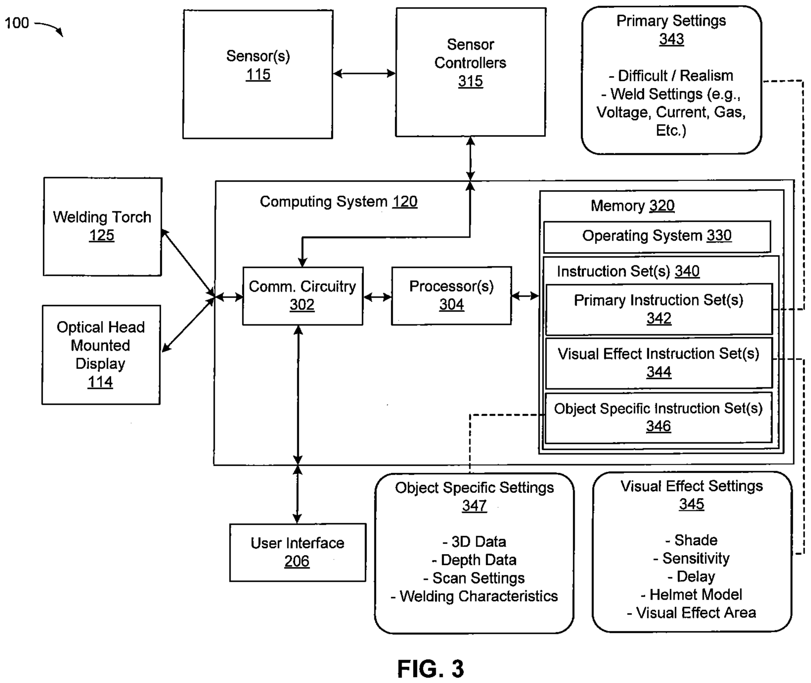

**Figure 3** is a block diagram of the augmented reality welding system 100 of Figures 1 and 2. In the example of Figure 3, the computing system 120 is in communication with the user interface 206 (e.g., via the OHMD 114), the optical head mounted display 114, one or more welding components (e.g., welding torch 125, welding wire feeder, welding power supply, etc.), and the sensors 115 (e.g., through the sensor controller(s) 315). In some examples, the sensors 115 may be in direct communication with the computing system 120 without going through the sensor controller(s) 315. As shown, the computing system 120 includes communication circuitry 302 configured to facilitate communication between the computing system 120 and the user interface 206, the OHMD 114, one or more welding components (e.g., welding torch 125), and the sensors 115 (e.g., through the sensor controller(s) 315).

The computing system 120 also includes memory 320 and one or more processors 304. As shown, the memory 320, processor(s) 304, and communication circuitry 302 are in electrical communication with each another, such as through a common data bus. The one or more processors 304 are configured to execute instructions stored in the memory 320.

In some implementations, the memory 320 or the non-transitory computer readable storage medium of the memory 320 stores an optional operating system 330 and one or more instruction set(s) 340. The operating system 330 includes procedures for handling various basic system services and for performing hardware dependent tasks. In some implementations, the instruction set(s) 340 include executable software defined by binary information stored in the form of electrical charge. In some implementations, the instruction set(s) 340 are software that is executable by the one or more processor(s) 304 to carry out one or more of the techniques described herein.

The instruction set(s) 340 include the primary instruction set(s) 342, the visual effect instruction set(s) 344, and the object specific instruction set(s) 346. The instruction set(s) 340 may be embodied as a single software executable or multiple software executables.

The memory 320 also stores data that may be used by each instruction set. In particular, as shown, the memory 320 stores primary settings 343 (e.g., such as may be relevant to the primary control process of the augmented reality welding system 100), visual effect settings 345 (e.g., such as may be relevant to a visual effect determination process), and object specific settings 347 (e.g., such as may be relevant for identifying the object-specific welding characteristic process for training with the augmented reality welding system 100 on distinctively shaped objects). In some examples, the primary settings 343 may include such settings as a (training) difficulty setting (e.g., easy, normal, hard, etc.), a realism setting (e.g., low, medium, high, etc.), and/or various weld settings (e.g., voltage, current, gas type, wire feed speed, workpiece material type, filler type, etc.). In some examples, the visual effect settings 345 may include such settings as a shade setting (e.g., low, medium, high or 1, 2, 3, 4, 5, etc.), a sensitivity setting (e.g., low, medium, high or 1, 2, 3, 4, 5, etc.), a delay setting (e.g., low, medium, high or 1, 2, 3, 4, 5, etc.), a helmet model/type setting, and/or a visual effect area setting (e.g., localized, expanded, entire, background, foreground, weld area, welding arc, weld pool, etc.). In some examples, the object specific settings 347 may include 3D data settings, depth data settings, scan settings for the one or more sensors 115, welding characteristics, and the like.

In some examples, the primary settings 343, visual effect settings 345, the object specific settings 347, and/or other data stored in memory may be used by either a primary control process, a visual effect determination process, and/or an object specific identification and training process described herein. In some examples, the primary control process, visual effect determination process, object specific identification and training process, primary settings 343, visual effect settings 345, object specific settings 347, and/or other data used by the augmented reality welding system 100 may be retrieved from an external memory device (e.g., flash drive, cloud storage, etc.) instead of, or in addition to, being stored in memory 320.

Although the instruction set(s) 340 are shown as residing on a single device, it should be understood that in other implementations, any combination of the elements may be located in separate computing devices. Moreover, Figure 3 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

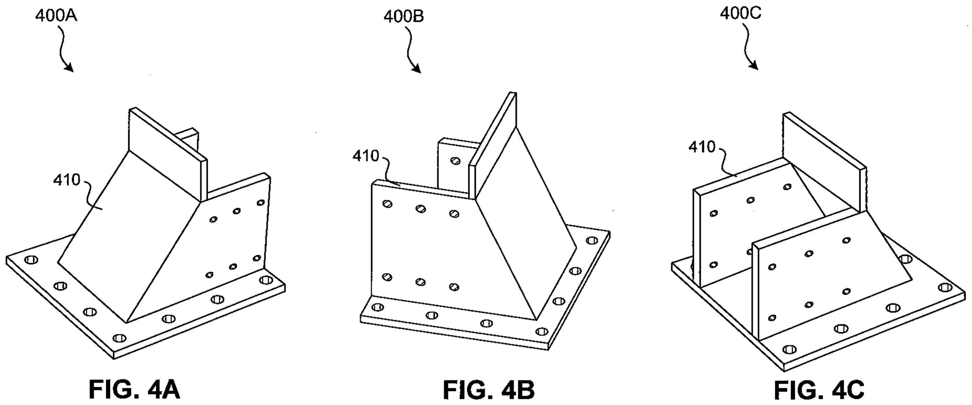

Figures 4A-7 illustrate operating the augmented reality welding system 100 described herein during a welding training session for a trainee for application with a distinctively shaped object. For example, the welding training objects 130, 132, 134, 136, and 138 (also referred to herein as "welding coupons" or "coupons") provide different testing joints (e.g., bead on plate, lap joint, T-joint, butt joint, pipe-to-plate, butt pipe, V-groove with backing, V-groove without backing, and the like) that are known to the augmented reality welding system 100 (e.g., all dimensions, joints, and the like may be programmed in the system). However, other objects that may include unique shapes would not be known to the augmented reality welding system 100 to automatically provide welding training instructions. In other words, the techniques described herein provide a user the ability to train virtual welding on unknown and uniquely shaped objects by incorporating 3D scanning technology to customize the virtual training welding on the augmented reality welding system 100 .

**Figures 4A-4C** illustrate different perspective views 400A, 400B, 400C, respectively, of a distinctively shaped object 410, in accordance with some implementations. For example, the distinctively shaped object 410 may be a unique product produced by an entity using the augmented reality welding system 100 to train the entity's welder's on how to weld the product without expending resources by actually welding on test products.

**Figure 5** illustrates 3D scanning of the distinctively shaped object 410 of Figures 4A-4C using the example augmented reality welding system 100 of Figure 1, in accordance with some implementations. For example, the augmented reality welding system 100 may use sensor 115 (e.g., a camera, such as light intensity image camera, depth camera, or the like) to scan the distinctively shaped object 410 as the user moves/rotates the distinctively shaped object 410 to capture at least a portion of the distinctively shaped object 410. For example, the amount of data needed may be determined by augmented reality welding system 100 or the user 104 as to what may be needed to be welded in the training system. In other words, a complete 3D scan of the distinctively shaped object 410 would provide a better platform for training on welding any portion of the distinctively shaped object 410, but is not necessary if you only need to practice welding on a top portion. Thus, the bottom surface (e.g., the surface laying flat on the desk 102), would not necessarily need to be scanned in order for the augmented reality welding system 100 to simulate the training session because the practice welds are only needed on the top surface components.

In some implementations, a user (e.g., a trainee such as user 104, or an instructor, or another person) may have previously scanned the distinctively shaped object 410 with a second, different device (e.g., another camera, or using a smartphone, tablet, another computer, or the like, that includes a sensor, such as a depth sensor) and the processes described herein may capture sensor data (e.g., image data such as light intensity data, depth data, camera position information, etc.), assess the images, select a subset of the sensor data based on the assessment, and provide a 3D representation for the distinctively shaped object 410. In some implementations, the 3D representation may be automatically displayed and updated on a user device overlaid during a live camera feed. In some implementations, the 3D representation may be provided after some type of user interaction after scanning the distinctively shaped object 410. For example, the user may be shown options of identified objects, and the user may select or click on the particular object that the user wants included in the 3D representation, and the 3D representation would then be displayed with the selected object.

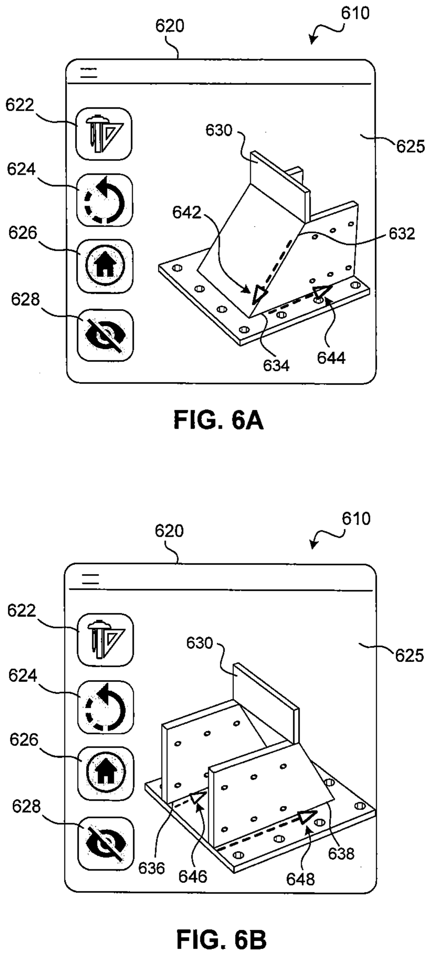

**Figures 6A-6D** illustrate views of virtual content associated with an object scanning application for a welding training user interface, in accordance with some implementations. In these examples, the virtual content 610 includes a welding training user interface 620 (e.g., an object scanning application) that includes a background area 625 and icons 622, 624, 626, 628 (e.g., icons associated with the object scanning application specifically or general icons for the user interface 620), and an object 630 (e.g., a representation of the distinctively shaped object 410). The welding training user interface 620 may be accessed from any electronic device, including the computing system 120, or may be accessed from a different device, such as a mobile device, a server, a personal computer, a cloud-based web application, and the like.

The welding training user interface 620 provides an end user (e.g., a welding trainer, a welding trainee, a developer, etc.) the ability to obtain 3D data associated with at least a portion of an object in a physical environment (e.g., distinctively shaped object 410) to determine a 3D model of at least the portion of the object based on the 3D data, and identify one or more welding characteristics associated with at least one surface of the object based on the 3D model. The 3D data may include depth data, a 3D point cloud and like that is obtained from an entire object scan, or just a portion of the object, such as a visible surface or just one surface/side of the object. In some implementations, the 3D data may be obtained from a different device (e.g., a mobile phone, a Lidar scanner, etc.) or maybe from a depth camera/sensor installed at the device (e.g., one or more sensors 115 of the augmented reality welding system 100). In this example, the one or more welding characteristics may include identifying a shape, a type, and/or a location of one or more weld joints associated with the object (e.g., weld joints 632 and 634 in Figure 6A, and weld joints 636 and 638 in Figure 6B).

In some implementations, the welding training user interface 620 may automatically identify the weld joints. Additionally, or alternatively, the welding training user interface 620 may allow a user (e.g., a weld trainer) to interact with the representation of the distinctively shaped object 410 via the welding training user interface 620 to identify and/or label the weld joints (e.g., butt, tee, corner, lap, edge, etc.). The identification and/or labeling may be automatically detected or added by a user and/or trainer, and a user may also select a welding area of the virtual model and/or select the welding characteristics from the welding training user interface 620 via the one or more icons 622, 624, 626, 628, or via other interfaces or interactive elements associated with the welding training user interface 620. In some implementations, icon 622 (e.g., a ruler application) may allow a user to access object measuring tools and other related applications. In some implementations, icon 624 (e.g., a pan/move application) may allow a user to pan, move, or rotate the object 630 to move the customized/distinct part around such that the user can inspect the welds either before or after the virtual welding process. In some implementations, icon 626 (e.g., an orientation application) may allow a user to reorient the object, such as set and automatically return to a home orientation after the user reorients the object to set the weld planning. In some implementations, icon 628 (e.g., a weld scoring application) may allow a user to hide/unhide a weld score or other virtual elements (e.g., virtual training elements 642 and 644, etc.) that are associated to each joint whether it be on a list, or the score is overlaid on the weld itself.

In some implementations, the welding training user interface 620 allows the augmented reality welding system 100 to identify one or more virtual training elements (e.g., training content associated with the welding characteristics) associated with the representation of the distinctively shaped object 410 based on the 3D model and the one or more welding characteristics (e.g., identify virtual weld joints and locations for the coupon). For example, the virtual training elements 642 and 644 are associated with weld joints 632 and 634 in Figure 6A, respectively, and the virtual training elements 646 and 648 are associated with weld joints 636 and 638 in Figure 6B, respectively. These virtual training elements may be used by the augmented reality welding system 100 to guide the user 104 during the welding training process as described herein with reference to Figures 2B and 2C.

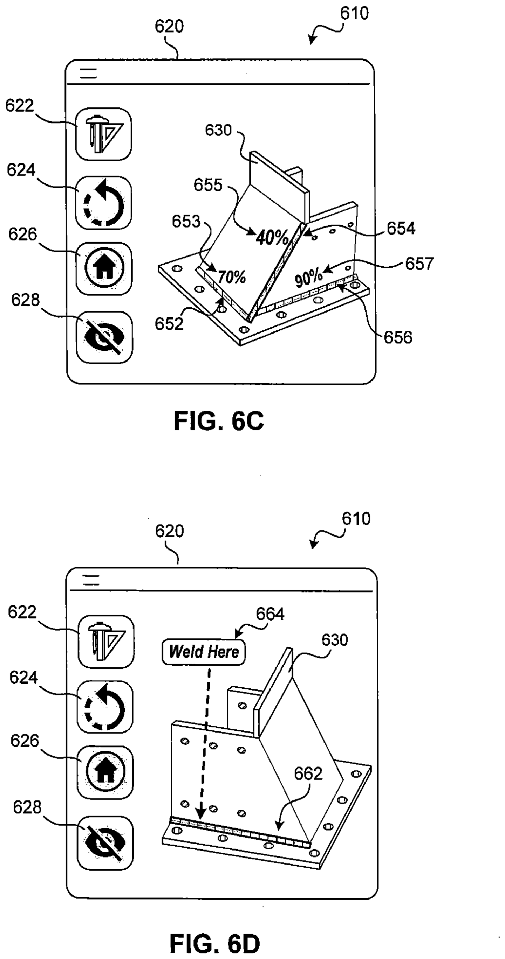

In some implementations, the welding training user interface 620 allows the augmented reality welding system 100 to provide additional feedback to the user before or after welding. For example, Figure 6C illustrates a weld scoring application. Because these distinctly shaped objects are more complex than the standard coupons and have multiple types of welds (vertical up, vertical down, flat, t-joint, etc.), the welding training user interface 620 may determine weld scores for each weld depending on accuracy and other welding characteristics and provide visual elements so each weld may have its own score. For example, for virtual weld joint 652, a weld score of 70% (notification 653) is displayed, for virtual weld joint 654, a weld score of 40% (notification 655) is displayed, and for virtual weld joint 656, a weld score of 90% (notification 657) is displayed. In some implementations, the weld scoring notifications may provide additional color coordinated overlays on top of each weld. For example, for the weld score of 40% the welding training user interface 620 may show the virtual weld joint 654 in red, and for the weld score of 90% the welding training user interface 620 may show the virtual weld joint 656 in green, and the like (e.g., green is good, yellow is ok, red is fail, etc.). Then the icon 628 (e.g., a weld scoring application) may allow a user to hide/unhide any or all of the scoring elements. In other words, the welding training user interface 620 provides the ability to individually grade each joint and view each joint for any distinct object with different types of weld joints.

In some implementations, the welding training user interface 620 allows the augmented reality welding system 100 to provide instructions or other notifications to train the user. For example, Figure 6D illustrates providing a notification 664 (e.g., "Weld Here") and a virtual training element 662, to highlight where the user may need to reweld, or a welding joint the user may have missed. Other notifications may be provided to the user, and may include auditory notifications in conjunction with or in lieu of visual augmented reality notification of a virtual element (e.g., notification 664).

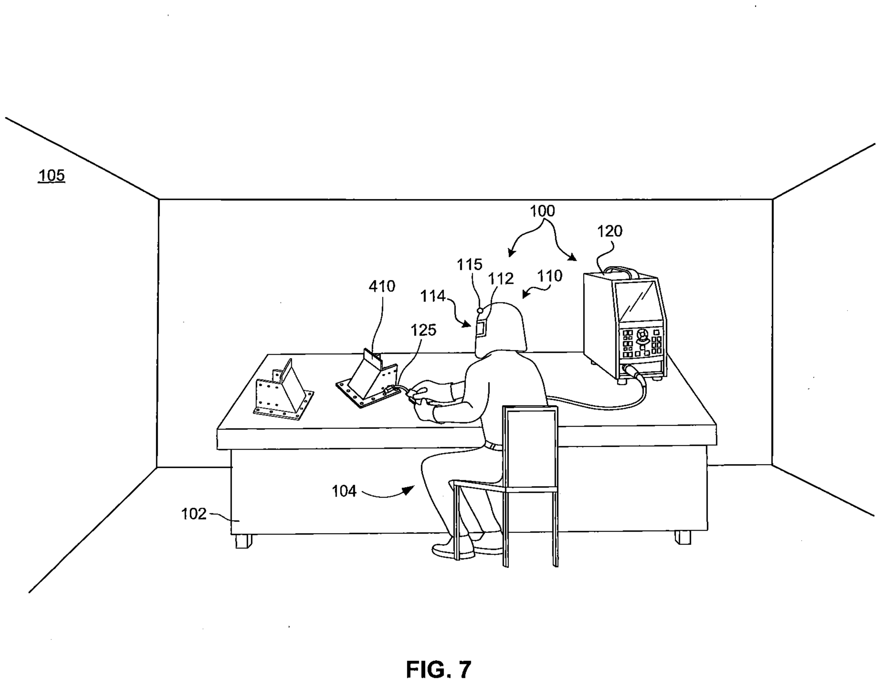

**Figure** 7 illustrates operating the exemplary device for an augmented reality welding system of Figure 1 during a welding training session for a trainee for application with the distinctively shaped object of Figures 4A-4C, in accordance with some implementations. In this example, Figure 7 illustrates virtually training on the distinctively shaped object 410 using the augmented reality welding system 100 after identifying one or more welding characteristics associated with at least one surface of the object based on the 3D model via the welding training user interface 620.

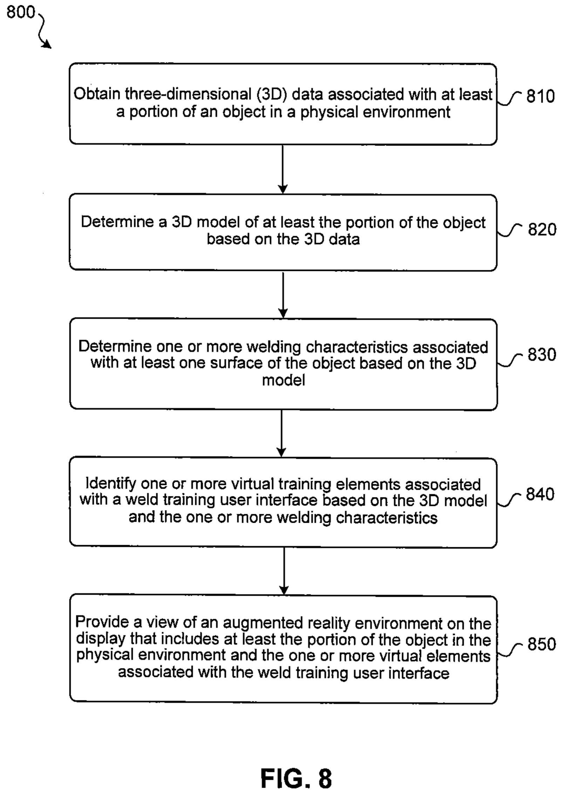

**Figure 8** is a flowchart illustrating a method 800 for implementing a welding training process for an object (e.g., distinctively shaped object 410), in accordance with some implementations. In some implementations, a device such as computing system 120 of the augmented reality welding system 100 performs method 800. In some implementations, method 800 is performed on a mobile device, desktop, laptop, head mounted device (HMD), or server device. In some implementations, the method 800 is performed by processing logic, including hardware, firmware, software, or a combination thereof. In some implementations, the method 800 is performed on a processor executing code stored in a non-transitory computer-readable medium (e.g., a memory). In some implementations, the device performing the method 800 includes a processor, a display, and one or more sensors.

In an exemplary embodiment, the process of method 800 is performed by the AR welding system 100 described herein. The process may first obtain 3D scan data of an object, such as, *inter alia,* a unique coupon (e.g., distinctive object 410). For example, the AR welding system 100 may obtain depth data from a previous scan or from a live scan using a sensor on the AR welding system or from another camera/device. The process may then identify object-specific welding characteristics for the distinctively shaped object. For example, identifying the object-specific welding characteristics may be automatically performed by the AR welding system, or setup by a user (e.g., a trainer that identifies the shape, type, and/or location of one or more weld joint(s)). Finally, the process may provide a view of the object (unique coupon) and a welding training user interface in an AR environment. These AR coupons may be stored in a database (and/or identified by a QR code) and reused at a subsequent time for training.

At block 810, the method 800 obtains 3D data associated with at least a portion of an object in a physical environment. The 3D data may include depth data, a 3D point cloud and like that is obtained from an entire object scan, or just a portion of the object, such as a visible surface or just one surface/side of the object. In some implementations, the 3D data may be obtained from a different device (e.g., a mobile phone, a Lidar scanner, etc.) or may be from a depth camera/sensor installed at the device (e.g., one or more sensors 115 of the augmented reality welding system 100).

In some implementations, the 3D data includes Time-of-Flight (ToF) data, Light Detection and Ranging (LIDAR) data, structured light data, stereo vision data, pulse-based data, phase-shift-based data, or a combination thereof. In some implementations, obtaining the 3D data includes a live scanning of the object in the physical environment using a sensor (e.g., depth camera). In some implementations, the sensor includes ToF sensor, a LIDAR sensor, a structured light sensor, a stereo vision sensor, a pulse-based sensor, a phase-shift-based sensor, or a combination thereof.

In some implementations, the device includes the sensor (e.g., sensor 115 positioned on the protective shell 111 of the simulated welding helmet 110 to view the external environment to scan one or more objects). Additionally, or alternatively, a different (second) device includes the sensor, wherein the different device is not associated with the welding training system (e.g., a mobile device). For example, a separate device, such as a mobile phone with a depth sensor, may obtain the 3D scan data of the distinctive object 410.

At block 820, the method 800 determines a 3D model of at least the portion of the object based on the 3D data. For example, the augmented reality welding system 100 may obtain depth data from a previous scan or from a live scan of the distinctively shaped object 410 using a sensor on the AR welding system or from another camera/device, and determine a 3D model for at least a portion of the distinctively shaped object 410.

In some implementations, the 3D model of at least the portion of the object is generated by the device of the welding training system (e.g., the computing system 120 of the augmented reality welding system 100 generates the 3D model). Alternatively, in some implementations, the 3D model of at least the portion of the object is generated by and obtained from a different device (e.g., an external computer, server, mobile device, and the like, obtains the 3D data of a scan of the distinctively shaped object 410, generates the 3D model using one or more 3D modeling techniques, and provides the 3D model to the computing system 120 of the augmented reality welding system 100).

At block 830, the method 800 determines one or more welding characteristics associated with at least one surface of the object based on the 3D model. For example, the one or more welding characteristics may include identifying a shape, a type, and/or a location of one or more weld joints associated with the object (e.g., weld joints 632 and 634 in Figure 6A, and weld joints 636 and 638 in Figure 6B).

In some implementations, determining the one or more welding characteristics associated with at least one surface of the object is based on a weld identification protocol that identifies at least one of a shape, a type, and a location of at least one weld joint associated with the at least one surface of the object. In some implementations, the identified shape, type, and location of the at least one weld joint associated with the at least one surface of the object is presented in a view of the welding training user interface (e.g., a user can review and accept/reject the automatic identification of a weld joint). Additionally, or alternatively, in some implementations, determining the one or more welding characteristics associated with at least one surface of the object is based on user input via the welding training user interface that identifies at least one of a shape, a type, and a location of at least one weld joint associated with the at least one surface of the object (e.g., a user identifies the weld joint(s)).

At block 840, the method 800 identifies one or more virtual training elements associated with a welding training user interface based on the 3D model and the one or more welding characteristics. For example, the virtual training elements 642 and 644 are associated with weld joints 632 and 634 in Figure 6A, respectively, and the virtual training elements 646 and 648 are associated with weld joints 636 and 638 in Figure 6B, respectively. These virtual training elements may be used by the augmented reality welding system 100 to guide the user 104 during the welding training process as described herein with reference to Figures 2B and 2C.

At block 850, the method 800 provides a view of an augmented reality environment on the display that includes at least the portion of the object in the physical environment and the one or more virtual elements associated with the welding training user interface. For the example, the augmented reality welding system 100 provides a view of the object (e.g., distinctively shaped object 410) and a welding training user interface 206 in an AR or XR environment (e.g., a simulated rendering of the AR welding environment).

In some implementations, the determined one or more welding characteristics associated with at least one surface of the object are stored in a coupon database. In some implementations, each determined one or more welding characteristics associated with at least one surface of the object are stored in the coupon database are identified based on a unique identification code (e.g., QR code label for each coupon). In some implementations, the method 800 further includes updating the view of the 3D model based on an object recognition protocol that identifies that the object has been moved (rotated) or a different object is positioned within the view of the XR environment. For example, a user/trainee moves from a view of one object to a different one, and the system can either recognize the object and pull the information from a database, or perform a 3D scan as a new object.

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.
Certain embodiments of the invention are described in the following clauses:
Clause 1. A method for a welding training system comprising:
   at a device having a processor and a display:
   obtaining three-dimensional (3D) data associated with at least a portion of an object in a physical environment;
   determining a 3D model of at least the portion of the object based on the 3D data;
   determining one or more welding characteristics associated with at least one surface of the object based on the 3D model;
   identifying one or more virtual training elements associated with a welding training user interface based on the 3D model and the one or more welding characteristics; and
   providing a view of an augmented reality (AR) environment on the display, the view comprising at least the portion of the object in the physical environment and the one or more virtual elements associated with the welding training user interface.
Clause 2. The method of clause 1, wherein the 3D data comprises Time-of-Flight (ToF) data, Light Detection and Ranging (LIDAR) data, structured light data, stereo vision data, pulse-based data, phase-shift-based data, or a combination thereof.
Clause 3. The method of clauses 1 or 2, wherein obtaining the 3D data comprises a live scanning of the object in the physical environment using a sensor.
Clause 4. The method of clause 3, wherein the sensor comprises a Time-of-Flight (ToF) sensor, a Light Detection and Ranging (LIDAR) sensor, a structured light sensor, a stereo vision sensor, a pulse-based sensor, a phase-shift-based sensor, or a combination thereof.
Clause 5. The method of clauses 3 or 4, wherein the device comprises the sensor.
Clause 6. The method of clauses 3 or 4, wherein the device is a first device, wherein a second device comprises the sensor, and wherein the second device is not associated with the welding training system.
Clause 7. The method of any of the clauses 1-6, wherein the 3D model of at least the portion of the object is generated by the device of the welding training system.
Clause 8. The method of any of the clauses 1-6, wherein the 3D model of at least the portion of the object is generated by and obtained from a different device.
Clause 9. The method of any of the clauses 1-8, wherein determining the one or more welding characteristics associated with at least one surface of the object is based on a weld identification protocol that identifies at least one of a shape, a type, and a location of at least one weld joint associated with the at least one surface of the object.
Clause 10. The method of clause 9, wherein the identified shape, type, and location of the at least one weld joint associated with the at least one surface of the object is presented in a view of the welding training user interface.
Clause 11. The method of any of the clauses 1-8, wherein determining the one or more welding characteristics associated with at least one surface of the object is based on user input via the welding training user interface that identifies at least one of a shape, a type, and a location of at least one weld joint associated with the at least one surface of the object.
Clause 12. The method of any of the clauses 1-11, wherein the determined one or more welding characteristics associated with at least one surface of the object are stored in a coupon database.
Clause 13. The method of clause 12, wherein each determined one or more welding characteristics associated with at least one surface of the object are stored in the coupon database are identified based on a unique identification code.
Clause 14. The method of any of the clauses 1-13, further comprising:
   updating the view of the 3D model based on an object recognition protocol that identifies that the object has been moved or a different object is positioned within the view of an extended reality (XR) environment.
Clause 15. A device comprising:
   a display;
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform operations comprising any of the method clause 1-14.
Clause 16. A welding training system, comprising:
   a display screen configured to display a simulated rendering; and
   control circuitry configured to perform operations comprising any of the method clause 1-14.
Clause 17. A non-transitory computer-readable storage medium, storing program instructions executable on a device comprising one or more processors to perform operations comprising any of the method clause 1-14.

## Claims

1. A method for a welding training system comprising:
at a device having a processor and a display:
obtaining three-dimensional (3D) data associated with at least a portion of an object in a physical environment;
determining a 3D model of at least the portion of the object based on the 3D data;
determining one or more welding characteristics associated with at least one surface of the object based on the 3D model;
identifying one or more virtual training elements associated with a welding training user interface based on the 3D model and the one or more welding characteristics; and
providing a view of an augmented reality (AR) environment on the display, the view comprising at least the portion of the object in the physical environment and the one or more virtual elements associated with the welding training user interface.

2. The method of claim 1, wherein the 3D data comprises Time-of-Flight (ToF) data, Light Detection and Ranging (LIDAR) data, structured light data, stereo vision data, pulse-based data, phase-shift-based data, or a combination thereof.

3. The method of claims 1 or 2, wherein obtaining the 3D data comprises a live scanning of the object in the physical environment using a sensor.

4. The method of claim 3, wherein the sensor comprises a Time-of-Flight (ToF) sensor, a Light Detection and Ranging (LIDAR) sensor, a structured light sensor, a stereo vision sensor, a pulse-based sensor, a phase-shift-based sensor, or a combination thereof.

5. The method of claims 3 or 4, wherein the device comprises the sensor.

6. The method of claims 3 or 4, wherein the device is a first device, wherein a second device comprises the sensor, and wherein the second device is not associated with the welding training system.

7. The method of any of the claims 1 to 6, wherein the 3D model of at least the portion of the object is generated by the device of the welding training system.

8. The method of any of the claims 1 to 6, wherein the 3D model of at least the portion of the object is generated by and obtained from a different device.

9. The method of any of the claims 1 to 8, wherein determining the one or more welding characteristics associated with at least one surface of the object is based on a weld identification protocol that identifies at least one of a shape, a type, and a location of at least one weld joint associated with the at least one surface of the object, and optionally wherein the identified shape, type, and location of the at least one weld joint associated with the at least one surface of the object is presented in a view of the welding training user interface.

10. The method of any of the claims 1 to 8, wherein determining the one or more welding characteristics associated with at least one surface of the object is based on user input via the welding training user interface that identifies at least one of a shape, a type, and a location of at least one weld joint associated with the at least one surface of the object.

11. The method of any of the claims 1 to 10, wherein the determined one or more welding characteristics associated with at least one surface of the object are stored in a coupon database and optionally,
wherein each determined one or more welding characteristics associated with at least one surface of the object are stored in the coupon database are identified based on a unique identification code.

12. The method of any of the claims 1 to 11, further comprising:
updating the view of the 3D model based on an object recognition protocol that identifies that the object has been moved or a different object is positioned within the view of an extended reality (XR) environment.

13. A device comprising:
a display;
a non-transitory computer-readable storage medium; and
one or more processors coupled to the non-transitory computer-readable storage medium, wherein the non-transitory computer-readable storage medium comprises program instructions that, when executed on the one or more processors, cause the one or more processors to perform operations comprising any of the method of claims 1 to 12.

14. A welding training system, comprising:
a display screen configured to display a simulated rendering; and
control circuitry configured to perform operations comprising any of the method of claims 1 to 12.

15. A non-transitory computer-readable storage medium, storing program instructions executable on a device comprising one or more processors to perform operations comprising any of the method of claims 1 to 12.
